(19) Europäisches Patentamt
European Patent Office
Office européen des brevets

(11) Veröffentlichungsnummer: **0 525 708 A1**

(12) **EUROPÄISCHE PATENTANMELDUNG**

(21) Anmeldenummer: **92112825.2**

(22) Anmeldetag: **28.07.92**

(51) Int. Cl.[5]: **B32B 9/02**, C08L 3/02, C08J 11/06

(30) Priorität: **30.07.91 DE 4125217**

(43) Veröffentlichungstag der Anmeldung: **03.02.93 Patentblatt 93/05**

(84) Benannte Vertragsstaaten: **CH DE DK FR IT LI**

(71) Anmelder: **EMS-INVENTA AG**
**Selnaustrasse 16**
**CH-8001 Zürich(CH)**

(72) Erfinder: **Caluori, Hans-Jürg**
**Oberdorf 8**
**CH-7306 Flaesch(CH)**
Erfinder: **Meier, Peter, Dr. sc. tech.**
**Pfannenstilstrasse 18**
**CH-8820 Wädenswil(CH)**
Erfinder: **Schultze, Hans-Joachim, Dr. rer. nat.**
**Tittwiesenstrasse 11**
**CH-7000 Chur(CH)**

(54) **Zwischenschichten für Mehrschichtformkörper sowie Verfahren zu deren Auflösung.**

(57) Die Erfindung betrifft Haft-Trenn-Zwischenschichten für recyclierbaren Mehrschichtformkörpern aus Innen- und Aussenschicht sowie gegebenenfalls Mittelschicht(en), wobei die Haft-Trenn-Zwischenschichten aus mindestens einer Stärkeformmasse bestehen, in wässrigem Medium auflösbar sind und dadurch die Schichtmaterialien des Mehrschichtformkörpers abtrennbar und recyclierbar sind. Weiterhin betrifft die Erfindung ein Verfahren zum Auflösen von Haft-Trenn-Zwischenschichten mit gleichzeitiger Abtrennung der einzelnen Schichtmaterialien des Mehrschichtformkörpers, so dass diese Schichtmaterialien wiederverwertet werden können.

EP 0 525 708 A1

Die Erfindung betrifft den in den Patentansprüchen angegebenen Gegenstand. Insbesondere betrifft die Erfindung Haft-Trenn-Zwischenschichten für einen recyclierbaren Mehrschichtformkörper aus Innen- und Aussenschicht sowie gegebenenfalls Mittelschicht(en), wobei die Haft-Trenn-Zwischenschichten aus mindestens einer Stärkeformmasse bestehen, in wässrigem Medium auflösbar sind und dadurch die Schichtmaterialien des Mehrschichtformkörpers abtrennbar und recyclierbar sind. Weiterhin betrifft die Erfindung ein Verfahren zum Auflösen von Haft-Trenn-Zwischenschichten mit gleichzeitiger Abtrennung der einzelnen Schichtmaterialien des Mehrschichtformkörpers, so dass diese Schichtmaterialien wiederverwertet werden können.

Moderne Verpackungsmaterialien, insbesondere solche für den Einsatz bei Lebensmitteln und anderen verderblichen Produkten bestehen aus technisch hochentwickelten Mehrschichtformkörpern, insbesondere Mehrschichtfolien, welche auch als Verbund-, Laminat-, Sandwich- oder Koextrusionsfolien bezeichnet werden.

Monofolien, hergestellt aus nur einem Polymeren, weisen spezifische Eigenschaften, z.B. niedrige Gasdurchlässigkeiten, auf. Folien aus Polyvinylidenchlorid, Polyacrylnitril, Viylalkohol-Copolymeren, modifizierten Polyamiden und Polyestern sind für eine gute Sauerstoff-Barrierewirkung bekannt. Die Sperreigenschaften dieser Folien gegenüber Wasserdampf sind jedoch gering und zudem beeinflussen hohe Feuchtigkeitsgehalte der Folien auch die Sauerstoffsperrwirkung negativ. Folien, hergestellt aus Polyolefinen, weisen dagegen gute Sperreigenschaften gegenüber Wasserdampf auf. Für Verpackungen werden daher Folien mit entsprechenden Eigenschaften so kombiniert, dass Mehrschichtfolien mit speziellem Eigenschaftsprofil resultieren.

Da aber die verschiedenen Polymer-Schichten zum Teil eine schlechte Haftung zueinander haben, erfolgt der Verbund durch spezielle synthetische Haftvermittler. Die auf solche Weise hergestellten Mehrschichtfolien sind zwar optimal bezüglich ihrer Verpackungsfunktion, sind aber nach Gebrauch nicht mehr in ihre einzelnen Folienschichten zerlegbar und daher nicht wiederverwendbar.

Mehrschichtfolien sowie die daraus durch Verformung hergestellten Formkörper wie Blister, Behälter, Flaschen etc. belasten daher die Umwelt, weil es bis heute noch keine Möglichkeiten gibt, auf umweltfreundliche Weise die verschiedenen Folienschichten nach Gebrauch der Folie wieder zu trennen und wieder zu verwerten. Als Entsorgungsmöglichkeiten bestehen zurzeit neben der Deponierung nur noch die Verbrennung, welche aber auch nicht mehr toleriert wird, sobald im Verbund chlorhaltige Kunststoffe enthalten sind.

An Hochschulen laufen daher noch nicht veröffentlichte Pilotprojekte, um aus gemischten Kunststoffabfällen, worunter auch Mehrschichtformkörper fallen, durch Pyrolyse oder in speziellen Verbrennungsöfen die den Kunststoffen zugrunde liegenden verschiedenen Kohlenwasserstoffe und andere Bestandteile zurückzugewinnen. Andere Projekte versuchen, die Kunststoffe selektiv mit organischen Lösungsmitteln aus den Mehrschichtfolien oder anderen Kunststoffmischungen zu isolieren.

All diese Recyclingarten erfordern aber aufwendige Aufbereitungsschritte und damit teure Anlagen, wobei die polymeren Werkstoffe mindestens teilweise zerstört werden. Deshalb sind bis jetzt auch all diese Versuche im Pilotstadium stehen geblieben.

Es war daher Aufgabe der Erfindung Haft-Trenn-Zwischenschichten für Mehrschichtformkörper aus Innen- und Aussenschicht sowie gegebenenfalls Mittelschicht(en) zur Verfügung zu stellen sowie ein Verfahren zum Auflösen dieser Haft-Trenn-Zwischenschichten mit gleichzeitiger Abtrennung der einzelnen Schichtmaterialien des Mehrschichtformkörpers, damit eine Wiederverwertung der verschiedenen Schichtmaterialien möglich ist.

Diese Aufgabe wird gelöst durch die Ansprüche 1 und 18. Die Unteransprüche beschreiben vorteilhafte Weiterbildungen der Erfindung.

Erfindungsgemässe Haft-Trenn-Zwischenschicht(en) besteht bzw. bestehen aus mindestens einer Stärkeformmasse, die mindestens eine nicht-derivatisierte Stärke und/oder derivatisierte Stärke enthält, welche einen Amylosegehalt von 0 bis 100 Gew.-%, bevorzugt 50 - 100 Gew.-% und besonders bevorzugt 70 bis 100 Gew.-% besitzt. Bevorzugterweise enthält die Stärkeformmasse Additive ausgewählt aus der Gruppe der Weichmacher, Harnstoff, Harnstoffderivate, Emulgatoren mit einem Hydrophil-Lipophil-Balance-Wert von 0 bis 20, wie z.B. Stearate, Polyoxyethylen (20)-Sorbitanmonolaurat oder Polyoxyethylen (20)-Sorbitanmonopalmitat, Gleit- und Trennmittel. Die derivatisierte Stärke besitzt einen Substitutionsgrad von bevorzugt 0,03 bis 0,3 und enthält in einer speziellen Ausführungsform Substituenten aus der Gruppe

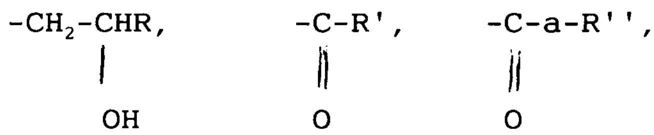

worin R ein H-Atom oder ein Alkylrest mit 1 bis 18 C-Atomen, R' ein Alkylrest mit 1 bis 18 C-Atomen, R'' eine OH-, OR- oder eine Polyethergruppe und a ein Methylen-, Ethylen- oder Isopropylenrest ist.

Eine andere Ausführungsform erfindungsgemässer Haft-Trenn-Zwischenschicht(en) enthält eine Stärkeformmasse, welche eine Stärke-Polymer-Mischung aus mindestens einer nicht und/oder derivatisierten Stärke und mindestens einem ausgewählten Polymeren mit einem Schmelz- oder Erweichungspunkt von 50 bis 200 ° C, bevorzugt 60 bis 150 ° C, ist. Der Anteil des(r) Polymeren, welche(s) bevorzugt aus der Gruppe der Polyester, Copolyester, Polyamide, Copolyamide, Polyolefine, Copolyolefine, Polyvinylalkohol, Ethylenoxidcopolymere, Propylenoxidcopolymere und Vinylalkoholcopolymere ausgewählt wird (werden), beträgt hierbei, bezogen auf die Gesamtmischung, 1 bis 90 Gew.-Teile, bevorzugt bis 60 Gew.-Teile.

Die Innen-, Aussen- und gegebenenfalls Mittelschicht(en) des recyclierbaren Mehrschichtformkörpers bestehen aus Polymeren, bevorzugt ausgewählt aus der Gruppe der Polyolefine und deren substituierten Derivate, Copolyolefine und deren substituierten Derivate, Polyester, Copolyester, Polyamide, Copolyamide, Polyvinylchlorid, Polyvinylidenchlorid, Polystyrole, Polycarbonate, Polyacrylnitril, Polysulfone, Polyacetate und Celluloseacetate, und/oder Metall, bevorzugt Aluminium, und/oder Metalloxid, bevorzugt ein Oxid des Siliziums, und/oder Karton und/oder siliziumorganische Verbindungen, bevorzugt Polysiloxane. Vorteilhafterweise werden die Metall- bzw. Metalloxidschichten hierbei mit entsprechenden Metallbedampfungsverfahren aufgebracht.

Von besonderem Vorteil ist, dass die erfindungsgemässe Haft-Trenn-Zwischenschichten selbst gute Barriere-Eigenschaften gegenüber Sauerstoff und Kohlendioxid besitzt.

Erfindungsgemässe Haft-Trenn-Zwischenschichten sind in recyclierbaren Mehrschichtformkörpern enthalten, welche als Folien, z.B. in Form von Blas- oder Flachfolien oder verformt zu Blisterfolien, oder als Hohlkörper, wie z.B. Flaschen, ausgebildet sein können und als Behälter und/oder Verpackungsmaterial im Lebensmittel-, Nonfood-, Medizinal-, Kosmetik- und Agrochemikalienbereich eingesetzt werden. Dem Fachmann werden noch weitere Einsatzmöglichkeiten für recyclierbaren Mehrschichtformkörpern mit erfindungsgemässen Haft-Trenn-Zwischenschichten in den Sinn kommen.

Erfindungsgemässes Verfahren zum Auflösen von Haft-Trenn-Zwischenschichten eines recyclierbaren Mehrschichtformkörpers mit gleichzeitiger Abtrennung der einzelnen Schichtmaterialien des Mehrschichtformkörpers aus Innen- und Aussenschicht sowie gegebenenfalls Mittelschicht(en) umfasst die folgenden Schritte: In einem ersten Schritt wird der Mehrschichtformkörper zu kleine Stücke oder Schnitzel zerkleinert, z.B. in einer Schneidemühle. In einem zweiten Schritt werden diese Schnitzel oder kleine Stücke in wässrigem Medium aufgeschlämmt und gegebenenfalls eine Zeit lang darin eingeweicht. In einem weiteren Schritt wird diese Aufschlämmung gegebenenfalls einer Enzymbehandlung unterworfen, bevor die Aufschlämmung mindestens einmal intensiv mechanisch behandelt wird, gegebenenfalls unter Erwärmung des wässrigen Mediums auf bevorzugt ca. 60 bis 80 ° C. Diese mechanische Behandlung, welche bevorzugt ein energieintensives Rühren, insbesondere in Pulpern oder Fiberizern, umfasst und 15 bis 60 Minuten, bevorzugt 15 bis 45 Minuten, besonders bevorzugt 20 bis 30 Minuten dauert, kann mit Frischwasser wiederholt werden.

Der pH-Wert der eingesetzten wässrigen Phase ist im Bereich von ca. 3 bis 12 gemäss der Löslichkeit der unterschiedlichen Stärkeformmassen variierbar. Wird jedoch vorgängig zur mechanischen Behandlung noch eine Enzymvorbehandlung durchgeführt, so muss der pH-Wert entsprechend dem optimalen pH-Wert der Enzymaktivität (pH 5 bis 9) angepasst werden.

Solche Enzymvorbehandlungen können vorteilhaft in den Prozess nach der Zerkleinerungsstufe eingefügt werden, wenn die Haft-Trenn-Zwischenschicht(en) aus einer Stärke-Polymer-Mischung besteht bzw. bestehen. Geeignete Enzyme hierzu sind z.B. die Bactosol Typen der Fa. Sandoz.

Eine Erhöhung der Löslichkeit von Haft-Trenn-Zwischenschichten kann durch Zusätze von Netz- und Antischaummitteln zur wässrigen Phase erreicht werden.

Die Schnitzelgrösse der zerkleinerten Mehrschichtformkörper wirkt sich ebenfalls auf die Geschwindigkeit des Auflösevorgangs aus. Je kleiner die eingesetzten Schnitzel sind, desto kürzer sind z.B. die notwendigen Behandlungszeiten in den Rühreinrichtungen. In der Praxis haben sich Schnitzel in einer Grössenordnung von 1-20 mm, je nach Typ der eingesetzten Stärkeformmasse, bewährt. Nachdem sich die Haft-Trenn-Zwischenschicht(en) im wässrigen Medium aufgelöst hat bzw. haben, liegt eine wässrige Aufschlämmung aus gelöster Stärkeformmasse und nicht gelöster(n), nun aufgetrennt nebeneinander

vorliegenden Innen-, Aussen- und Mittelschichtmonofolien vor, welche in einen oder mehreren Sedimentiertank(s) überführt wird. Dort sammeln sich die einzelnen Monofolienschnitzel gemäss ihrer Dichte an der Wasseroberfläche , verteilen sich innerhalb des Wassers oder sinken auf den Boden ab. Dadurch können sie voneinander abgetrennt werden. Es ist auch möglich, die spezifisch leichteren von den spezifisch schwereren Schnitzel in kontinuierlichen Verfahren in Abtrennkammern zu separieren. Neben dem Schwimm-Sink-System kann die Abtrennung aber auch mittels eines Hydrozyklons erfolgen. Ein Zentrifugalfeld trennt die Polymerschnitzel, indem z.B. ein innerer, aufwärts gerichteter Wasserwirbel die spezifisch leichtere Fraktion ausbringt. Ein abwärts gerichteter Aussenwirbel separiert die spezifisch schwerere Fraktion.

Nach ihrer Trocknung können die separierten Materialschnitzel wieder verwertet werden, z.B. durch Aufschmelzen und Granulieren des Polymeren. Die Schichtmaterialien der Mehrschichtformkörper stehen dann also als Rohstoff wieder zur Verfügung. Das stärkehaltige Abwasser ist dagegen biologisch abbaubar und lässt sich über eine Kläranlage problemlos entsorgen.

Die folgenden Beispiele erläutern die Erfindung, ohne sie darauf zu beschränken.

Es wurden folgende Markenprodukte verwendet:

| | |
|---|---|
| - LDPE 150 | ist ein Low-Density-Polyethylen der Fa. DOW CHEMICAL mit einem Schmelzpunkt von ca. 100 °C |
| - Novolen 1300 | ist ein Polypropylen der Fa. BASF mit einem Schmelzpunkt von ca. 160 °C |
| - Grilon CR 9 | ist ein Copolyamid auf Basis der Monomeren von PA 6 und PA 12 der Fa. EMS-CHEMIE mit einem Schmelzpunkt von ca. 200 °C |
| - Grilon XE 3222 | ist ein Copolyamid auf Basis der Monomeren von Polyamid 6 und Polyamid 6.9 der Fa. EMS-CHEMIE mit einem Schmelzpunkt von ca. 202 °C |
| - Surlyn 1652 | ist ein Ionomer der Fa. Du Pont mit einem Schmelzpunkt von ca. 80 - 95 °C |
| - Grilamid L 25 | ist ein Polyamid 12 der Fa. EMS-CHEMIE mit einem Schmelzpunkt von ca. 178 °C |
| - Eval EP-F101 | ist ein Ethylenvinylalkoholpolymer der Fa. Kuraray (Japan) mit einem Schmelzpunkt von ca. 164 - 189 °C |
| - Lexan 141 | ist ein Polycarbonat der Fa. GENERAL ELECTRIC mit einer Glastemperatur von ca. 150 °C |
| - UBE Nylon 5033B | ist ein Copolyamid auf Basis der Monomeren von Polyamid 6 und Polyamid 6.6 der UBE (Japan) mit einem Schmelzpunkt von ca. 200 °C |
| - Kodapak PET 7352 | ist ein Polyethylenterepthalat der Fa. EASTMAN CHEMICAL mit einem Schmelzpunkt von ca. 250 - 265 °C |
| - Givory G 21 | ist ein amorphes Copolyamid auf Basis von Hexamethylendiamin, Terephthal- und Isophthalsäure der Fa. EMS-CHEMIE mit einer Glastemperatur von ca. 125 °C |
| - Dowlex 2476 | ist ein Linear Low Density Polyethylen der Fa. DOW CHEMICAL, mit einem Schmelzpunkt von ca. 118 - 125 °C |
| - Grilon F 40 | ist ein Polyamid 6 der Fa. EMS-CHEMIE mit einem Schmelzpunkt von ca. 220 °C |
| - Grilon CF 62 BSE | ist ein Copolyamid auf Basis der Monomeren von Polyamid 6 und Polyamid 6.9 der Fa. EMS-CHEMIE mit einem Schmelzpunkt von ca. 134 °C |
| - Grilon CF 6S | ist ein Copolyamid auf Basis der Monomeren von Polyamid 6 und Polyamid 12 der Fa. EMS-CHEMIE mit einem Schmelzpunkt von ca. 130 °C |
| - Grilon A 28 NZ | ist ein schlagzähmodifiziertes Polyamid 6 der Fa. EMS-CHEMIE mit einem Schmelzpunkt von ca. 220 °C |
| - Bactosol MTN | ist ein Produkt der Fa. SANDOZ und enthält Enzym-Stämme auf Basis von stabilisierten bakteriellen Amylosen in gepuffertem Medium |
| - Grilon XE 3294 | ist ein Polyamid 6 der Fa. EMS-CHEMIE mit einem Schmelzpunkt von ca. 220 °C |
| - Lupolen 4730 | ist ein High Density Polyethylen der Fa. BASF mit einem Schmelzpunkt von ca. 131 °C |
| - Grilon CF 62 BS | ist ein Copolyamid auf Basis der Monomeren von Polyamid 6 und Polyamid 6.9 der Fa. EMS-CHEMIE mit einem Schmelzpunkt von ca. 138 °C |
| - Benvic IR 35 | ist ein Polyvinylchlorid der Fa. Solvay mit einer Glastemperatur von ca. 80 °C |

## I. Herstellung der Stärkeformmassen für erfindungsgemässe Haft-Trenn-Zwischenschichten

A) Stärkeformmasse I:

Nach dem in der deutschen Patentanmeldung DE 4 117 628.6 beschriebenen Verfahren wurden aus 70 Gew.-Teilen Hydroxypropylmaisstärke mit einem Substitutionsgrad von 0,06 und einem Amylosegehalt von 50 Gew.-% sowie 15 Gew.-Teilen Glycerol, 12,8 Gew.-Teilen Sorbitol, 2 Gew.-Teilen Harnstoff und 0,2 Gew.-Teilen Magnesiumstearat eine Stärkeformmasse hergestellt.

B) Stärkeformmasse II:

70 Gew.-Teile der Stärkeformmasse I wurden mit 30 Gew.-Teilen Grilon CF 62 BSE gemischt und in die Dosierzone eines Doppelwellenextruders ZSK-30 (Fa. Werner & Pfleiderer) eindosiert und zu einer Stärkeformmasse verarbeitet.

**II. Herstellung von recyclierbaren Mehrschichtformkörpern mit erfindungsgemässen Haft-Trenn-Zwischenschichten**

Beispiele 1 bis 22: Mehrschichtfolien

Auf einer dem Stand der Technik entsprechenden Koextrusionsanlage für die Blas- und Flachfolienherstellung wurden Mehrschichtfolien mit koextrudierten Haft-Trenn-Zwischenschichten aus der Stärkeformmasse I oder II hergestellt.

In den Beispielen 14 und 15 wurde Karton koextrusionsbeschichtet.

In Beispiel 5 wurde eine durch Kalandrieren hergestellte PVC-Folie koextrusionsbeschichtet.

In den Beispielen 6, 7 und 14 erfolgte die Siliziumdioxidbzw. Aluminiumbeschichtung mittels einer Vakuummetallbedampfungsanlage.

Der Schichtaufbau, die Schichtmaterialien und die Schichtdicken der einzelnen Mehrschichtfolien sind Tabelle 1 zu entnehmen.

Beispiel 23: Hohlkörper

Aus einer dem Stand der Technik entsprechenden Extrusionsblasformanlage wurde eine Mehrschichtflasche hergestellt. Ihr Schichtaufbau, ihre Schichtmaterialien sowie ihre einzelnen Schichtdicken sind Tabelle 1 zu entnehmen.

**III. Auflösung der Haft-Trenn-Zwischenschichten mit gleichzeitiger Abtrennung der einzelnen Schichtmaterialien von Mehrschichtformkörpern**

Die Mehrschichtformkörper der Beispiele 1 bis 23 wurden mit einer Laborschneidmaschine (Typ Kondux) zu Schnitzel der Grösse von ca. 3 - 10 mm zerkleinert.

Die resultierenden Mehrschichtformkörperschnitzel der Beispiele Nr. 2, 5, 6 und 7 wurden einer enzymatischen Abbaureaktion mit Bactosol unterworfen:

| | |
|---|---|
| Rührkessel<br>Wasser<br>Folienschnitzel | 500 l<br>300 l<br>20 kg |
| Flottenzusätze | 2 ml/l Sandopan DWF (Netzmittel)<br>3 ml/l Bactosol MTN |
| pH-Wert<br>Temperatur<br>Behandlungszeit | 6 - 7<br>60 °C<br>60 Minuten |

Je 5 kg Schnitzel der Beispiele Nr. 1, 3 und 4, 8 und 9 bis 23 sowie die enzymvorbehandelten Schnitzel der Beispiele 2, 5, 6 und 7 wurden nach der Enzymvorbehandlung in einen Laborpulper mit 200 l Frischwasser und einer Temperatur von 60 °C gegeben, aufgeschlämmt und während 15 Minuten gepulpt. Anschliessend wurde das stärkehaltige Wasser abgezogen und die Aufschlämmung mit frischem Wasser bei einer Temperatur von 60 °C nochmals während 5 Minuten im Pulper behandelt. Nach dem Umpumpen

in einen Sedimentiertank und anschliessendem Sedimentationsvorgang liessen sich die abgetrennten Monoschichtschnitzel gemäss ihrer Dichte und ihrer Schichtmaterialien, und damit nach Polymeren, separieren. Nach dem Trocknen wurden die abgetrennten Polymerschnitzel separat aufgeschmolzen und granuliert und standen dann als Rohstoff wieder zur Verfügung. Das stärkehaltige Abwasser ist biologisch abbaubar und wurde über die Kläranlage problemlos entsorgt.

Tabelle 1: Mehrschichtformkörper mit erfindungsgemässen Haft-Trenn-Zwischenschichten

| Beispiel | Schicht | Schichtmaterial | Schichtdicke [$\mu m$] |
|---|---|---|---|
| Folien: | | | |
| 1 | Aussen- oder Innen-<br>Haft-Trenn-Zwischen-<br>Innen- oder Aussen- | LDPE 150<br>Stärkeformmasse I<br>LDPE 150 | 50<br>150<br>50 |
| 2 | Aussen- oder Innen-<br>Haft-Trenn-Zwischen-<br>Innen- oder Aussen- | Novolen 1300<br>Stärkeformmasse II<br>Novolen 1300 | 50<br>75<br>50 |
| 3 | Aussen- oder Innen-<br>Haft-Trenn-Zwischen-<br>Innen- oder Aussen- | Grilon CR 9<br>Stärkeformmasse I<br>LDPE 150 | 25<br>100<br>50 |
| 4 | Aussen- oder Innen-<br>Haft-Trenn-Zwischen-<br>Mittel-<br>Haft-Trenn-Zwischen-<br>Innen- oder Aussen- | Grilon XE 3222<br>Stärkeformmasse I<br>Grilon XE 3222<br>Stärkeformmasse I<br>LDPE 150 | 15<br>80<br>15<br>80<br>50 |
| 5 | Aussen-<br>Haft-Trenn-Zwischen-<br>Innen- | Benvic IR 35<br>Stärkeformmasse II<br>Surlyn 1652 | 250<br>75<br>50 |
| 6 | Aussen- oder Innen-<br>Haft-Trenn-Zwischen-<br>Innen- oder Aussen- | Grilamid L 25<br>Stärkeformmasse II<br>Aluminium | 50<br>75<br>0.8 |
| 7 | Aussen- oder Innen-<br>Haft-Trenn-Zwischen-<br>Innen- oder Aussen- | Grilamid L 25<br>Stärkeformmasse II<br>$SiO_2$ | 25<br>75<br>0.6 |
| 8 | Aussen- oder Innen-<br>Haft-Trenn-Zwischen-<br>Innen- oder Aussen- | Grilon XE 3222<br>Stärkeformmasse I<br>Surlyn 1652 | 25<br>80<br>50 |

| | | | |
|---|---|---|---|
| 9 | Aussen- oder Innen-<br>Haft-Trenn-Zwischen-<br>Mittel-<br>Haft-Trenn-Zwischen-<br>Innen- oder Aussen- | LDPE 150<br>Stärkeformmasse I<br>Eval EP-F101<br>Stärkeformmasse I<br>LDPE 150 | 20<br>80<br>6<br>80<br>20 |
| 10 | Aussen- oder lnnen-<br>Haft-Trenn-Zwischen-<br>Mittel-<br>Haft-Trenn-Zwischen-<br>Innen- oder Aussen- | Lexan 141<br>Stärkeformmasse I<br>UBE Nylon 5033 B<br>Stärkeformmasse I<br>Lexan | 20<br>60<br>20<br>60<br>20 |
| 11 | Aussen- oder Innen-<br>Haft-Trenn-Zwischen-<br>Mittel-<br>Haft-Trenn-Zwischen-<br>Innen- oder Aussen- | Kodapak PET 7352<br>Stärkeformmasse I<br>Grivory G 21<br>Stärkeformmasse I<br>Kodapak PET 7352 | 150<br>80<br>50<br>80<br>100 |
| 12 | Aussen- oder lnnen-<br>Haft-Trenn-Zwischen-<br>Mittel-<br>Haft-Trenn-Zwischen-<br>Innen- oder Aussen- | Kodapak PET 7352<br>Stärkeformmasse I<br>Grivory G 21<br>Stärkeformmasse I<br>Dowlex 2476 | 150<br>60<br>50<br>60<br>100 |
| 13 | Aussen-<br>Haft-Trenn-Zwischen-<br>Innen- | Grilon F 40<br>Stärkeformmasse I<br>LDPE 150 | 25<br>100<br>60 |
| 14 | Aussen-<br>Haft-Trenn-Zwischen-<br>Mittel-<br>Haft-Trenn-Zwischen-<br>Innen- | Karton<br>Stärkeformmasse I<br>Aluminium<br>Stärkeformmasse I<br>LDPE 150 | $300 g/m^2$<br>60<br>20<br>60<br>60 |
| 15 | Aussen-<br>Haft-Trenn-Zwischen-<br>Innen- | Karton<br>Stärkeformmasse I<br>LDPE 150 | $300 g/m^2$<br>80<br>40 |

| | | | |
|---|---|---|---|
| 16 | Aussen- oder Innen-<br>Haft-Trenn-Zwischen-<br>Innen- oder Aussen- | Grilon CF 6 S<br>Stärkeformmasse I<br>Surlyn 1652 | 50<br>80<br>100 |
| 17 | Aussen- oder Innen-<br>Haft-Trenn-Zwischen-<br>Innen- oder Aussen- | LDPE 150<br>Stärkeformmasse I<br>Novolen 1300 | 50<br>100<br>50 |
| 18 | Aussen- oder Innen-<br>Haft-Trenn-Zwischen-<br>Innen- oder Aussen- | Kodapak PET 7352<br>Stärkeformmasse I<br>Grilon XE 3294 | 50<br>100<br>25 |
| 19 | Aussen- oder Innen-<br>Haft-Trenn-Zwischen-<br>Mittel-<br>Haft-Trenn-Zwischen-<br>Mittel-<br>Haft-Trenn-Zwischen-<br>Innen- oder Aussen- | LDPE 150<br>Stärkeformmasse I<br>Grilon CF 62 BS<br>Stärkeformmasse I<br>Eval EP-F101<br>Stärkeformmasse I<br>Surlyn 1652 | 50<br>50<br>70<br>60<br>10<br>60<br>80 |
| 20 | Aussen- oder Innen-<br>Haft-Trenn-Zwischen-<br>Innen- oder Aussen- | LDPE 150<br>Stärkeformmasse I<br>Siliciumoxid * | 20<br>50<br>0.3 |
| 21 | Aussen- oder Innen-<br>Haft-Trenn-Zwischen-<br>Innen- oder Aussen- | LDPE 150<br>Stärkeformmasse II<br>Aluminium ** | 20<br>40<br>0.4 |
| 22 | Aussen- oder Innen-<br>Haft-Trenn-Zwischen-<br>Innen- oder Aussen- | LDPE 150<br>Stärkeformmasse I<br>Siloxan *** | 20<br>50<br>1 |
| <u>Hohl-<br>körper:</u> | | | |
| 23 | Aussen- oder Innen-<br>Haft-Trenn-Zwischen-<br>Innen- oder Aussen- | Lupolen 4730<br>Stärkeformmasse I<br>Grilon A 28 NZ | 1000<br>60<br>80 |

* Die $SiO_x$ - Bedampfung erfolgte im Hochvakuum ($4 \times 10^{-4}$ Torr) in Sauerstoffatmosphäre durch Silizium mittels Lichtbogen während 30 Minuten

** Die Aluminiumbedampfung erfolgte im Hochvakuum ($6 \times 10^{-4}$ Torr) während 20 Minuten

*** Die Siloxanbeschichtung erfolgte durch Auftragen von Diethoxydimethylsilan mittels eines Rakels auf die Stärkeschicht und anschliessender Vernetzung mittels einer Elektronenstrahlkanone.

## Patentansprüche

1. Haft-Trenn-Zwischenschicht(en) für einen recyclierbaren Mehrschichtformkörper aus Innen- und Aussenschicht sowie gegebenenfalls Mittelschicht(en), wobei die Haft-Trenn-Zwischenschicht(en) aus mindestens einer Stärkeformmasse besteht bzw. bestehen sowie in wässrigem Medium auflösbar ist bzw. sind und dadurch die Schichtmaterialien des Mehrschichtformkörpers abtrennbar und recyclierbar sind.

2. Haft-Trenn-Zwischenschicht(en) für einen recyclierbaren Mehrschichtformkörper gemäss Anspruch 1, wobei die Stärkeformmasse mindestens eine nicht-derivatisierte und/oder derivatisierte Stärke enthält.

3. Haft-Trenn-Zwischenschicht(en) für einen recyclierbaren Mehrschichtformkörper gemäss Anspruch 2, wobei die Stärke einen Amylosegehalt von 0 bis 100 Gew.-%, bevorzugt 50 bis 100 Gew.-%, besonders bevorzugt von 70 bis 100 Gew.-%, besitzt.

4. Haft-Trenn-Zwischenschicht(en) für einen recyclierbaren Mehrschichtformkörper gemäss den Ansprüchen 2 und 3, wobei in der derivatisierten Stärke die Hydroxygruppen durch Substituenten ausgewählt aus der Gruppe

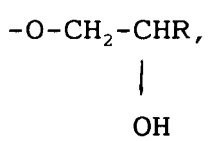
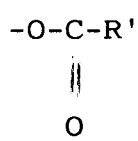
und
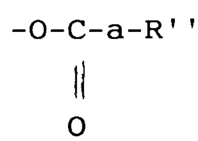

ersetzt sind, wobei

R ein H-Atom oder ein Alkylrest mit 1 bis 18 C-Atomen,
R' ein Alkylrest mit 1 bis 18 C-Atomen,
R'' eine OH-, OR- oder Polyethergruppe und
a ein Methylen-, Ethylen oder Isopropylenrest ist.

5. Haft-Trenn-Zwischenschicht(en) für einen recyclierbaren Mehrschichtformkörper gemäss den Ansprüchen 2 bis 4, wobei die derivatisierte Stärke einen Substitutionsgrad von 0,03 bis 0,3 besitzt.

6. Haft-Trenn-Zwischenschicht(en) für einen recyclierbaren Mehrschichtformkörper gemäss den Ansprüchen 2 bis 5, wobei die Stärkeformmasse Additive ausgewählt aus der Gruppe der Weichmacher, Harnstoff, Harnstoffderivate, Emulgatoren, Gleitmittel und Trennmittel enthält.

7. Haft-Trenn-Zwischenschicht(en) für einen recyclierbaren Mehrschichtformkörper gemäss den Ansprüchen 2 bis 6, wobei die Stärkeformmasse eine Stärke-Polymer-Mischung aus mindestens einer nichtderivatisierten Stärke und/ oder derivatisierten Stärke und mindestens einem linearen Polymeren mit einem Schmelz- oder Erweichungspunkt von 50 bis 200 ° C, bevorzugt 60 bis 150 ° C, ist.

**8.** Haft-Trenn-Zwischenschicht(en) für einen recyclierbaren Mehrschichtformkörper gemäss Anspruch 7, wobei das lineare Polymere ausgewählt ist aus der Gruppe der Polyester, Copolyester, Polyamide, Copolyamide, Polyolefine, Copolyolefine, Polyvinylalkohole, Ethylenoxidpolymere, Propylenoxidpolymere und Vinylalkoholcopolymere.

**9.** Haft-Trenn-Zwischenschicht(en) für einen recyclierbaren Mehrschichtformkörper gemäss den Ansprüchen 7 und 8, wobei der Polymeranteil 1 bis 90 Gew.-Teile, bevorzugt bis 60 Gew.-Teile, bezogen auf die Gesamtmischung, beträgt.

**10.** Haft-Trenn-Zwischenschicht(en) für einen recyclierbaren Mehrschichtformkörper gemäss den Ansprüchen 1 bis 9, wobei die Innen- und Aussenschicht sowie die gegebenenfalls Mittelschicht(en) ausgewählt sind aus der Gruppe der Polymeren, der Metalle, der Metalloxide , der siliciumorganischen Verbindungen und Karton.

**11.** Haft-Trenn-Zwischenschicht(en) für einen recyclierbaren Mehrschichtformkörper gemäss Anspruch 10, wobei das Polymere ausgewählt ist aus der Gruppe der Polyolefine und deren Derivaten, der Copolyolefine und deren Derivaten, Polyester, Copolyester, Polyamide, Copolyamide, Polyvinylchloride, Polyvinylidenchloride, Polystyrole, Polycarbonate, Polyacrylnitrile, Polysulfone, Ionomere, Polyacetate und Celluloseacetate.

**12.** Haft-Trenn-Zwischenschicht(en) für einen recyclierbaren Mehrschichtformkörper gemäss Anspruch 10, wobei das Metall Aluminium ist.

**13.** Haft-Trenn-Zwischenschicht(en) für einen recyclierbaren Mehrschichtformkörper gemäss Anspruch 10, wobei das Metalloxid ein Oxid des Siliziums ist.

**14.** Haft-Trenn-Zwischenschicht(en) für einen recyclierbaren Mehrschichtformkörper gemäss Anspruch 10, wobei die siliziumorganische Verbindung Siloxan ist.

**15.** Haft-Trenn-Zwischenschicht(en) für einen recyclierbaren Mehrschichtformkörper gemäss den Ansprüchen 1 bis 14, wobei der Mehrschichtformkörper eine Mehrschichtfolie ist.

**16.** Haft-Trenn-Zwischenschicht(en) für einen recyclierbaren Mehrschichtformkörper gemäss den Ansprüchen 1 bis 14, wobei der Mehrschichtformkörper ein Hohlkörper ist.

**17.** Haft-Trenn-Zwischenschicht(en) für einen recyclierbaren Mehrschichtformkörper gemäss den Ansprüchen 1 bis 16, wobei der Mehrschichtformkörper als Behälter oder Verpackungsmittel, bevorzugt im Lebensmittel-, Nonfood-, Medizinal-, Kosmetik- und Agrochemikalienbereich eingesetzt wird.

**18.** Verfahren zum Auflösen von Haft-Trenn-Zwischenschichten eines recyclierbaren Mehrschichtformkörpers gemäss den Ansprüchen 1 bis 17 mit gleichzeitiger Abtrennung der einzelnen Schichtmaterialien des Mehrschichtformkörpers aus Innen- und Aussenschicht sowie gegebenenfalls Mittelschicht(en), in dem

a) der Mehrschichtformkörper zu kleinen Stücken oder Schnitzel zerkleinert wird
b) diese mindestens einmal in wässrigem Medium aufgeschlämmt und gegebenenfalls eingeweicht werden
c) diese Aufschlämmung gegebenenfalls einer Enzymbehandlung unterworfen wird
d) diese Aufschlämmung mindestens einmal intensiv mechanisch behandelt wird, gegebenenfalls unter Erwärmung des wässrigen Mediums, so dass dann in der Aufschlämmung kleine Stücke oder Schnitzel der Innen-, Aussen- oder Mittelschicht(en) aufgetrennt nebeneinander vorliegen
e) diese Aufschlämmung in mindestens einen Sedimentiertank überführt wird, in dem die kleinen Stücke oder Schnitzel sich entsprechend ihrer Materialdichte ansammeln und
f) diese abgetrennt werden

**19.** Verfahren gemäss Anspruch 18, wobei die Grösse der kleinen Stücke oder Schnitzel 1 bis 20 mm

beträgt.

**20.** Verfahren gemäss den Ansprüchen 18 und 19, wobei die mechanische Behandlung in Schritt d) ein energieintensives Rühren, bevorzugt in Pulpern oder Fiberizers, umfasst.

**21.** Verfahren gemäss den Ansprüchen 18 bis 20, wobei das wässrige Medium in Schritt d) auf 60 bis 80 ° C erhitzt wird.

**22.** Verfahren gemäss den Ansprüchen 18 bis 21, wobei die mechanische Behandlung in Schritt d) 15 bis 60 Minuten, bevorzugt 15 bis 45 Minuten, besonders bevorzugt 20 bis 30 Minuten dauert.

**23.** Verfahren gemäss den Ansprüchen 18 bis 22, wobei das wässrige Aufschlämmmedium einen pH-Wert von 3 bis 12 besitzt.

**24.** Verfahren gemäss den Ansprüchen 18 bis 22, wobei das wässrige Aufschlämmmedium bei der Enzymvorbehandlung einen pH-Wert von 5 bis 9 besitzt.

Europäisches Patentamt

# EUROPÄISCHER RECHERCHENBERICHT

Nummer der Anmeldung

EP 92 11 2825

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DATABASE WPIL<br>Section Ch, Week 8351,<br>Derwent Publications Ltd., London, GB;<br>Class A32, AN 83-847253<br>& JP-A-58 193 254 (TOYO SEIKAN KAISHA)<br>* Zusammenfassung * | 1-3,<br>10-12,<br>15-17 | B32B9/02<br>C08L3/02<br>C08J11/06 |
| A | GB-A-1 456 629 (TOYO SODA MANUFACTURING CO. LTD.)<br>* Ansprüche 1,4 *<br>* Seite 2, Zeile 109 - Seite 2, Zeile 124 * | 1 | |
| A | US-A-4 543 364 (R.J. NANKEE ET AL.)<br>* Anspruch 9 * | 18 | |
| P,X | WO-A-9 116 375 (TOMKA, Y.)<br>* Ansprüche 1-9 *<br>* Seite 3, Zeile 25 - Seite 4, Zeile 18 * | 1,2,6-15 | |

RECHERCHIERTE SACHGEBIETE (Int. Cl.5 )

B32B
C08L
C08J
C09J

Der vorliegende Recherchenbericht wurde für alle Patentansprüche erstellt

| Recherchenort | Abschlußdatum der Recherche | Prüfer |
|---|---|---|
| DEN HAAG | 25 NOVEMBER 1992 | HALLEMEESCH A.D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)